# EUROPÄISCHE PATENTANMELDUNG

(11) **EP 4 303 470 A1**
(43) Veröffentlichungstag der Anmeldung: **10.01.2024**
(21) Anmeldenummer: 23179925.5
(22) Anmeldetag: 19.06.2023
(51) Int. Cl.: F16J 15/02, F16J 15/10, F16J 15/12

(54) **STATISCHE DICHTUNG MIT INTEGRIERTER STÜTZFUNKTION**

(30) Priorität: 08.07.2022 DE 102022117065
(71) Anmelder: Aerostack GmbH, 72581 Dettingen an der Erms (DE)
(72) Erfinder: DAHL, Karsten, 72581 Dettingen an der Erms (DE); STIEFEL, Alexander, 72581 Dettingen an der Erms (DE)
(74) Vertreter: LKGLOBAL Lorenz & Kopf Patentanwalt Attorney at Law PartG mbB

(57) **Zusammenfassung**

Es ist ein eine Dichtung (10) mit integrierter Stützfunktion für eine statische axiale Dichtungsanwendung im Kraftnebenschluss, insbesondere für einen resultierenden Dichtspalt, insbesondere mit variabler Höhe, gezeigt. Die Dichtung (10) umfasst eine erste Struktur (12) umfassend ein erstes Material, und eine zweite Struktur (14) umfassend ein zweites Material, wobei die erste Struktur (12) und die zweite Struktur (14) zumindest teilweise miteinander verbunden sind, und wobei die erste Struktur (12) eine höhere Härte, insbesondere Shore-A-Härte, als die zweite Struktur (14) aufweist, wobei die erste Struktur (12) länglich ausgestaltet ist und ein erstes Ende (16) und ein zweites Ende (18) umfasst und ausgestaltet ist, ihrer Länge nach in eine Dichtnut einführbar zu sein, und wobei die zweite Struktur (14) das zweite Ende (18) zumindest teilweise umschließt und somit einen an das zweite Ende (18) anschließenden flexiblen Bereich (20) ausbildet, derart, dass die Dichtung an dem flexiblen Bereich (20) kompressibel ist und somit Höhenunterschiede ausgleichen kann. Die Dichtung (10) liefert somit eine Funktionsintegration einer Dichtung (10) mit integrierter Stützfunktion mit einem flexiblen Bereich (20) für die Dichtspaltüberbrückung großer und variabler Dichtspalte sowie einer Dichtfunktion gegenüber den Kontaktpartnern.

## Beschreibung

### Technisches Gebiet

Die vorliegende Beschreibung betrifft eine statische Dichtung mit integrierter Stützfunktion.

### Technischer Hintergrund

Dichtungen sind Elemente oder Konstruktionen, denen die Aufgabe zu Grunde liegt, ungewollte Stoffübergänge von einem Ort zu einem anderen zu verhindern oder zu begrenzen. Typischerweise werden Dichtungen dabei in dynamische und statische Anwendungsfälle unterschieden. Bei dynamischen Dichtungen führen die abzudichtenden Elemente eine rotatorische, eine translatorische, oder eine Kombination aus beiden Bewegungsformen zueinander durch. Statische Dichtungen werden demgegenüber bei zueinander ruhenden Elementen eingesetzt. Beispiele für lösbare statische Dichtungen sind die Verwendung von Dichtmasse oder die Verwendung eines O-Rings, während unlösbare statische Dichtungen beispielsweise über eine Schweißung eingebracht werden.

Wird bei einem statischen Anwendungsfall in eine Dichtnut eine Dichtung, beispielsweise in Form einer Profildichtung, eingebracht, und diese mit Druck beaufschlagt, kann es abhängig von der Beschaffenheit und den Toleranzen der Systemelemente und dem Betriebsdruck zu einer Extrusion der Dichtung, auch als Spaltextrusion bekannt, kommen.

Mit Spaltextrusion wird dabei der Vorgang bezeichnet, bei dem die Dichtung durch eine Druckdifferenz, zum Beispiel den Betriebsdruck oder einem Druck im Fehlerfall, ganz oder teilweise in den Spalt der abzudichtenden Bauteile gedrückt wird. Der Abstand zwischen diesen beiden Bauteile wird als Dichtspalt bezeichnet.

Die Extrusionsneigung kann unter anderem durch die Härte und die mechanischen Eigenschaften des Dichtungswerkstoffs beeinflusst werden. Werkstoffe mit hoher Härte, Steifigkeit und/oder Festigkeit weisen in der Regel einen höheren Widerstand gegen Spaltextrusion auf. Deshalb kann durch den Einsatz von separaten Stützringen, sogenannten Back-Ringen, die aus einem härteren Werkstoff als dem der Dichtung bestehen, das Hineinpressen der Dichtung in den Dichtspalt verhindert werden.

Hohe Fertigungstoleranzen, ungleiche Verspannung oder Verschraubung der Dichtpartner sowie variable Dichtspalte infolge von Unebenheiten, thermischer Ausdehnung, Druckspitzen um Betrieb oder ähnliche Umstände können global oder lokal den Dichtspalt vergrößern und damit die Neigung der Dichtung zur Spaltextrusion erhöhen und die Dichtung somit negativ beeinflussen.

### Beschreibung

Es kann als Aufgabe betrachtet werden, eine statische Dichtung bereit zu stellen, die vormals genannte Probleme beseitigt.

Diese Aufgabe wird gelöst durch den Gegenstand des unabhängigen Anspruchs. Weitere Ausführungsformen ergeben sich aus den abhängigen Ansprüchen sowie aus der folgenden Beschreibung.

Gemäß einem ersten Aspekt ist eine Dichtung mit integrierter Stützfunktion für eine statische axiale Dichtungsanwendung im Kraftnebenschluss, insbesondere für einen resultierenden Dichtspalt, insbesondere mit variabler Höhe, angegeben. Die Dichtung weist eine erste Struktur, umfassend ein erstes Material, und eine zweite Struktur, umfassend ein zweites Material, auf. Die erste Struktur und die zweite Struktur sind zumindest teilweise miteinander verbunden. Die erste Struktur weist eine höhere Härte, insbesondere Shore-A-Härte als die zweite Struktur auf. Die erste Struktur ist länglich ausgestaltet und umfasst ein erstes Ende und ein zweites Ende. Die erste Struktur ist ferner ausgestaltet, ihrer Länge nach in eine Dichtnut einführbar zu sein. Die zweite Struktur umschließt das zweite Ende zumindest teilweise und bildet somit einen an das zweite Ende anschließenden flexiblen Bereich aus. Die Dichtung ist an dem flexiblen Bereich kompressibel und kann somit Höhenunterschiede ausgleichen.

Die Dichtung verbindet somit zwei Funktionen. Einerseits die Überbrückung größerer Dichtspalte in einer statischen axialen Dichtungsanwendung im Kraftnebenschluss, und andererseits die Vermeidung von Spaltextrusion bei größeren, nicht exakt definierten oder variablen Dichtspalten. Dies ist insbesondere bei höheren Betriebsdrücken vorteilhaft.

Gemäß dieser Ausführungsform umfasst die Dichtung somit eine erste Struktur, die aufgrund ihrer Materialeigenschaften funktional einem Back-Ring entspricht. Das erste Material ist somit beständig gegenüber einem Hineinpressen in den Dichtspalt und bietet somit einen höheren Widerstand gegenüber Spaltextrusion. Das zweite Material der zweiten Struktur ist hinsichtlich seiner Materialeigenschaften derart ausgebildet, dass es gegenüber dem ersten Material von geringerer Härte ist. Unter Härte ist dabei der mechanische Widerstand zu verstehen, den ein Werkstoff der mechanischen Eindringung eines anderen Körpers entgegensetzt. Die zweite Struktur bildet dadurch einen flexiblen Bereich aus, wobei unter einem flexiblen Bereich ein Bereich zu verstehen ist, der sich unter der Einwirkung einer mechanischen Last reversibel verformt. Der Anteil des flexiblen Bereichs an der Längsausprägung der Dichtung kann dabei 50%, vorzugsweise 25%, weiter vorzugsweise 10%, noch weiter vorzugsweise weniger als 5% betragen. Variiert der Dichtspalt, können Höhenunterschiede durch eine Kompression und/oder Deformation des flexiblen Bereichsausgeglichen werden, so dass die Stützfunktion des Backrings weiter gewährleistet ist. Damit bleibt die Dichtfunktion erhalten und die Spaltextrusion wird vermieden.

Gemäß einer weiteren Ausführungsform umfasst die zweite Struktur eine erste Dichtlippe. Unter einer Dichtlippe ist dabei eine Vorrichtung zu verstehen die funktional eingerichtet ist ungewollte Stoffübergänge von einem Ort zu einem anderen an einer bestimmten Stelle in Form einer Protrusion an der Dichtung zu verhindern oder zu begrenzen. Die Dichtlippe steht dabei in Kontakt mit dem abzudichtenden Bauteil und umfasst vorzugsweise ein elastisches Material um eine definierte Kontaktfläche sowie eine ausreichende Dichtlippenverpressung zu gewährleisten. Die Anpressfläche dient dabei als Barriere für den ungewollten Stoffübergang. Ziel der Dichtung ist die Vermeidung einer Leckage mittels eines Stoffübergangs durch Konvektion, Permeation und Diffusion.

Gemäß einer weiteren Ausführungsform umfasst die erste Dichtlippe ein drittes Material. Dies hat zur Folge, dass die Dichtung drei verschiedene Materialien enthält. Die Anforderungen an das dritte Material sind vor allem durch seine funktionalen Eigenschaften zur Abdichtung gegeben. Das dritte Material dient damit weder der Stützfunktion noch der Funktion einen flexiblen Bereich zur Kompensation von Höhenunterschieden auszubilden.

Gemäß einer weiteren Ausführungsform umfasst das erste Material und/oder das zweite Material ein Elastomer oder ein Thermoplast.

Unter einem Elastomer sind formfeste, aber elastisch verformbare Kunststoffe, deren Glasübergangspunkt sich unterhalb der Einsatztemperatur befindet zu verstehen. Elastomere können sich bei Zug- und Druckbelastung elastisch verformen, finden aber danach in ihre ursprüngliche, unverformte Gestalt zurück. Ursache der Gummielastizität ist überwiegend die Fähigkeit der geknäulten Polymerketten, auf eine Zugbelastung mit einer Streckung bzw. Entflechtung der Ketten zu reagieren. Wird ein Polymer durch eine Zugspannung gedehnt, richten sich die Ketten bevorzugt in Richtung der Belastung aus. Das Elastomer wird also gedehnt. Sobald die Zugspannung entfällt oder reduziert wird, beginnen die Ketten wieder mit der zufälligen Drehbewegung, in deren Verlauf sie wieder die statistisch begründete Gauß-Verteilung einnehmen. Die Ketten kehren in ihre bevorzugte knäuelartige Konformation zurück, wodurch sich das Elastomer zusammenzieht. Die Elastizität besteht also im Strecken unter Zugspannung und im Zusammenziehen nach Abfall der Spannung.

Unter einem Thermoplast sind Kunststoffe zu verstehen, die sich in einem bestimmten Temperaturbereich thermo-plastisch verformen lassen. Dieser Vorgang ist reversibel, das heißt, er kann durch Abkühlung und Wiedererwärmung bis in den schmelzflüssigen Zustand beliebig oft wiederholt werden, solange nicht durch Überhitzung die sogenannte thermische Zersetzung des Materials einsetzt. Thermoplaste sind aus wenig oder nicht verzweigten, also linearen Kohlenstoffketten aufgebaut, die nur durch schwache physikalische Bindungen miteinander verbunden sind. Diese Bindungskräfte sind wirksamer, wenn die Ketten parallel ausgerichtet sind. Solche Bereiche nennt man kristallin, im Gegensatz zu amorphen Bereichen, in denen die Makromoleküle verknäult vorliegen. Prinzipiell lassen sich Thermoplaste auch mechanisch und thermisch bearbeiten. Unter mechanischer Bearbeitung versteht man z. B. Sägen, Fräsen, Schleifen, Drehen, Hobeln sowie die Fügeverfahren Kleben und Schweißen.

Gemäß einer weiteren Ausführungsform umfasst das erste Material und/oder das zweite Material ein Duroplast.

Unter einem Duroplast sind Kunststoffe zu verstehen, die nach ihrer Aushärtung durch Erwärmung oder andere Maßnahmen nicht mehr verformt werden können. Sie enthalten harte, amorphe, unlösliche Polymere. Die Makromoleküle sind über kovalente Bindungen engmaschig vernetzt, was ihre fehlende Erweichung beim Erhitzen verursacht, daher sind sie nach der Aushärtung nur spanabhebend bearbeitbar. Die Vorprodukte oder Prepolymere sind in der Regel Kunstharze, die noch schmelzbar bzw. löslich sind und - oft mit Füll- und Farbstoffen versetzt - gegossen oder warmgepresst werden können. Die Prepolymere sind tri- oder mehrfunktionelle Verbindungen, die mit Hilfe von Härtern und evtl. Katalysatoren oder durch hohe Temperaturen polymerisieren und zu einer engmaschigen Vernetzung führen. Duroplaste können aufgrund ihrer hohen Vernetzung nicht aufgeschmolzen werden und zerfallen nach Überschreiten ihrer Zersetzungstemperatur, auch Pyrolyse genannt. Auf hohe mechanische Einwirkung reagieren Duroplaste mit Rissen oder Sprüngen. Im Vordergrund stehen bei Duroplasten ihre hohen thermomechanischen Festigkeiten und im Vergleich zu Metallen ihre geringen spezifischen Gewichte.

Gemäß einer weiteren Ausführungsform weist das zweite Material eine Shore-A-Härte im Bereich von 50 bis 70, und das erste Material eine Shore-A-Härte im Bereich von 80 bis 90 auf. Die Shore-Härte ist ein Werkstoffkennwert für Elastomere und Kunststoffe und ist in den Normen DIN EN ISO 868, DIN ISO 7619-1 und ASTM D2240-00 festgelegt. Dabei wird zwischen Shore-A und Shore-D wie nachfolgend beschrieben unterschieden.

Shore-A wird angegeben bei Weich-Elastomeren, nach Messung mit einer Nadel mit abgestumpfter Spitze. Die Stirnfläche des Kegelstumpfs hat einen Durchmesser von 0,79 Millimetern, der Öffnungswinkel beträgt 35°, das Auflagegewicht 1 kg und die Haltezeit 15 s. Die Messung der Shore-A Härte kann auch auf anderem Wege erfolgen.

Shore-D wird angegeben bei Zäh-Elastomeren nach Messung mit einer Nadel, die mit einem 30°-Winkel zuläuft und eine kugelförmige Spitze mit einem Durchmesser von 0,2 Millimetern hat. Das Auflagegewicht beträgt 5 kg und die Haltezeit 15 s.

Das Kernstück des Shore-Härte-Prüfers oder Durometers besteht aus einem federbelasteten Stift aus gehärtetem Stahl. Dessen Eindringtiefe in das zu prüfende Material ist ein Maß für die Shore-Härte, die auf einer Skala von 0 Shore, 2,5 Millimeter Eindringtiefe, bis 100 Shore, 0 Millimeter Eindringtiefe, gemessen wird. Eine hohe Zahl bedeutet also eine große Härte. Bei einem Shore-Härteprüfgerät ist eine Zusatzeinrichtung einsetzbar, die die zu messende Probe mit einer Kraft von 12,5 Newton bei Shore-A, bzw. 50 Newton bei Shore-D auf den Messtisch andrückt. Bei der Bestimmung der Shore-Härte spielt die Temperatur eine höhere Rolle als bei der Härtebestimmung metallischer Werkstoffe. Deshalb wird hier die Solltemperatur von 23 °C auf das Temperaturintervall von ± 2 K beschränkt. Die Materialdicke sollte mindestens 6 Millimeter betragen. Die Härte des Gummis wird durch die Vernetzung, wobei Weichgummi schwach vernetzt ist und Hartgummi stark vernetzt ist, bestimmt. Aber auch der Gehalt an Füllstoffen ist für die Härte eines Gummiartikels ausschlaggebend.

Gemäß einer weiteren Ausführungsform umfasst die erste Struktur und die zweite Struktur einen 2-Komponenten Gummi-Gummi Verbund.

Gemäß einer weiteren Ausführungsform umfasst das Material einen metallischen Werkstoff. Unter einem metallischen Werkstoff sind alle Materialien zu verstehen, die in fester oder flüssiger Form eine hohe elektrische Leitfähigkeit, die mit steigender Temperatur abnimmt, eine hohe Wärmeleitfähigkeit, Duktilität und metallischen Glanz aufweisen. Diese Eigenschaften beruhen darauf, dass der Zusammenhalt der betreffenden Atome mit der metallischen Bindung erfolgt, deren wichtigstes Merkmal die im Gitter frei beweglichen Elektronen sind.

Gemäß einer weiteren Ausführungsform ist die Dichtung eingerichtet, die Dichtfunktion im Kraftnebenschluss auszuüben. Im Kraftnebenschluss überträgt die Dichtung nur einen Teil der Kraft, abhängig von der erforderlichen Vorverformung der Dichtung bei der Montage.

Gemäß einer weiteren Ausführungsform umfasst der Querschnitt der Dichtung eine V-Form, eine K-Form oder eine H-Form. Der Querschnitt ist dabei nicht auf diese Formen beschränkt und kann sich in Längsausprägung ändern.

Gemäß einer weiteren Ausführungsform umfasst die Dichtung in ihrer Längsausprägung eine geschlossene Geometrie oder eine offene Geometrie.

Gemäß einer weiteren Ausführungsform umfasst die zweite Struktur eine zweite Dichtlippe, insbesondere mehrere Dichtlippen. Die Anzahl der Dichtlippen ist dabei nicht begrenzt und sie können sich in Form, Anzahl und Orientierung unterscheiden.

Gemäß einer weiteren Ausführungsform ist das erste Ende und/oder das zweite Ende abgerundet oder abgekantet ausgestaltet.

Gemäß einem weiteren Aspekt ist ein Vehikel angegeben, aufweisend eine Dichtung nach der oben beschriebenen Art. Unter einem Vehikel ist dabei beispielsweise ein Luftfahrzeug, ein Schiff, ein Raumfahrzeug oder ein Straßenfahrzeug zu verstehen. Ein Luftfahrzeug ist dabei beispielsweise ein Passagierflugzeug, ein Helikopter, eine Drohne, ein Luftschiff oder ein Segelflugzeug zu verstehen.

Gemäß einem weiteren Aspekt ist eine Vorrichtung angegeben, aufweisend eine Dichtung der oben beschriebenen Art. Unter einer Vorrichtung ist beispielsweise jede Vorrichtung zu verstehen, die im stationären Maschinenbau eingesetzt wird.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1: eine schematische Darstellung einer Dichtung mit integrierter Stützfunktion, gemäß einem ersten Ausführungsbeispiel.
- Fig. 2: eine schematische Darstellung einer Dichtung mit integrierter Stützfunktion, gemäß einem weiteren Ausführungsbeispiel.
- Fig. 3: eine schematische Darstellung der Dichtung mit integrierter Stützfunktion aus Fig. 2 in eingebautem Zustand, gemäß einem weiteren Ausführungsbeispiel.
- Fig. 4: eine schematische Darstellung einer Dichtung mit integrierter Stützfunktion in eingebautem Zustand bei verschieden großen Dichtspalten, gemäß einem weiteren Ausführungsbeispiel.
- Fig. 5: eine schematische Darstellung einer Dichtung mit integrierter Stützfunktion, gemäß einem weiteren Ausführungsbeispiel.
- Fig. 6: eine schematische Darstellung einer Dichtung mit integrierter Stützfunktion, gemäß einem weiteren Ausführungsbeispiel.

### Detaillierte Beschreibung von Ausführungsbeispielen

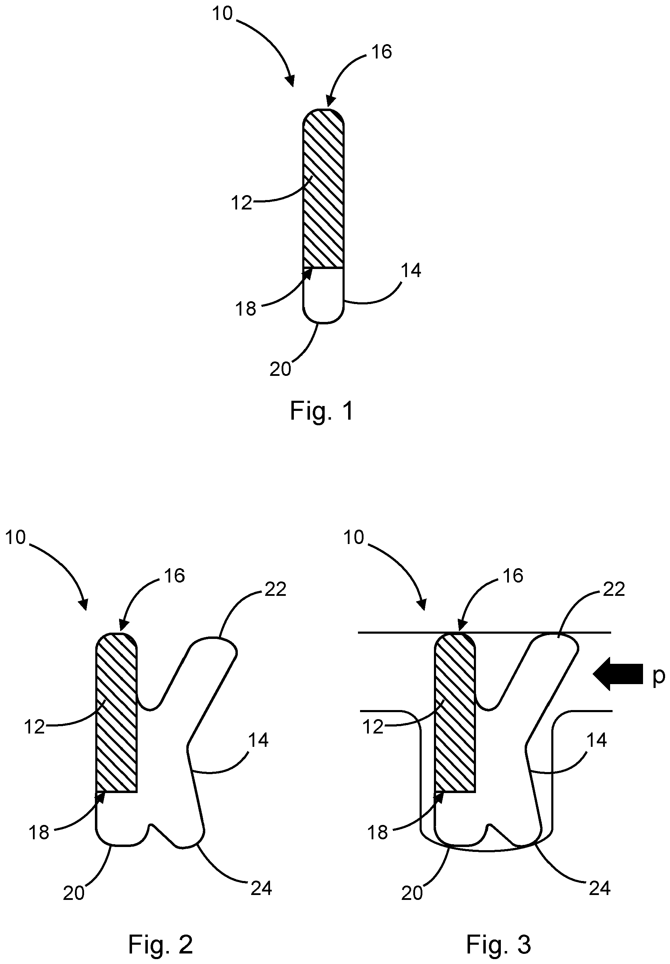

Fig. 1 zeigt eine Dichtung 10 mit integrierter Stützfunktion für eine statische axiale Dichtungsanwendung im Kraftnebenschluss, insbesondere für einen resultierenden Dichtspalt, insbesondere mit variabler Höhe. Die Dichtung weist eine erste Struktur 12 umfassend ein erstes Material, und eine zweite Struktur 14 umfassend ein zweites Material, auf. Die erste Struktur 12 und die zweite Struktur 14 sind zumindest teilweise miteinander verbunden, und die erste Struktur 12 weist eine höhere Härte als die zweite Struktur 14 auf. Die erste Struktur 12 ist länglich ausgestaltet und umfasst ein erstes Ende 16 und ein zweites Ende 18. Die erste Struktur ist ferner ausgestaltet, ihrer Länge nach in eine Dichtnut einführbar zu sein. Die zweite Struktur 14 umschließt das zweite Ende 18 zumindest teilweise und bildet somit einen an das zweite Ende 18 anschließenden flexiblen Bereich 20 aus, derart, dass die Dichtung an dem flexiblen Bereich 20 kompressibel ist und somit Höhenunterschiede ausgleichen kann.

In der gezeigten Ausführungsform ist das zweite 18 Ende abgekantet und mit der zweiten Struktur 14 verbunden. Die Kante kann dabei senkrecht oder in einem Winkel zu der Längsausprägung der Dichtung 10 verlaufen. Die Verbindung zwischen erster 12 zu zweiter Struktur 14 kann dabei über Vulkanisation bei zwei Elastomerpartnern, über einen stoffschlüssigen Verbund mittels Haftungspromotor oder ähnliche stoffschlüssige Fügeverfahren, und/oder über einen mechanischen Verbund in Form eines Formschlusses erfolgen.

Da die zweite Struktur 14 den flexiblen Bereich 20 ausbildet, ist das Verhältnis von erster 12 zu zweiter Struktur 14 entlang der Höhe der Dichtnut maßgeblich für das Ausgleichen eines Dichtspalts mit variabler Höhe. Je größer der flexible Bereich 20 ist, desto höher kann der auszugleichende Höhenunterschied des Dichtspalts sein. Ferner hängt der in der Höhe auszugleichende Dichtspalt auch von der Geometrie des eigentlichen Dichtelements, der Gesamthöhe des Bauteils, den eingesetzten Materialien sowie der Formgebung der gesamten Dichtung ab.

Vorzugsweise ist das zweite Material ein Elastomer und weist eine Shore-A-Härte im Bereich von 50 bis 70, und das erste Material eine Shore-A-Härte im Bereich von 80 bis 90 auf.

Fig. 2 zeigt eine weitere Ausführungsform der in Fig. 1 beschriebenen Dichtung 10 mit integrierter Stützfunktion für eine für eine statische axiale Dichtungsanwendung im Kraftnebenschluss, insbesondere für einen resultierenden Dichtspalt, insbesondere mit variabler Höhe. Die Dichtung 10 weist ebenfalls eine erste Struktur 12 umfassend ein erstes Material, und eine zweite Struktur 14 umfassend ein zweites Material, auf. Die erste Struktur 12 und die zweite Struktur 14 sind zumindest teilweise miteinander verbunden, und die erste Struktur 12 weist eine höhere Härte, insbesondere Shore-A-Härte, als die zweite Struktur 14 auf. Die erste Struktur 12 ist länglich ausgestaltet und umfasst ein erstes Ende 16 und ein zweites Ende 18. Die erste Struktur 12 ist ferner ausgestaltet, ihrer Länge nach in eine Dichtnut einführbar zu sein. Die zweite Struktur 14kann das zweite Ende 18 wie im gezeigten Fall zumindest teilweise umschließen und bildet somit einen an das zweite Ende 18 anschließenden flexiblen Bereich 20 aus, derart, dass die Dichtung an dem flexiblen Bereich 20 kompressibel ist und somit Höhenunterschiede ausgleichen kann.

Die in Fig. 2 beschriebene Dichtung 10 unterscheidet sich dabei durch zwei zusätzliche Dichtlippen 22 und 24. Der Querschnitt der Dichtung 10 weist dabei eine K-Form auf. Die Dichtlippen 22 und 24 können dabei aus dem gleichen Material wie die zweite Struktur 14 sein. Alternativ können die Dichtlippen 22 und 24 aus einem zu dem Material der zweiten Struktur 14 verschiedenem Material sein. Das Material der ersten Dichtlippe 22 kann sich von dem Material der zweiten Dichtlippe 24 unterscheiden oder mit diesem identisch sein.

Fig.3 zeigt die in Fig. 2 beschriebene Ausführungsform in einem verbauten Zustand. Die Dichtung 10 ist dabei in einer Dichtnut angeordnet. Das erste Ende 16 und die erste Dichtlippe 22 stehen dabei in Kontakt mit einem ersten Bauteil und der flexible Bereich 20 und die zweite Dichtlippe 24 stehen in Kontakt mit dem Nutgrund. In Pfeilrichtung wirkt ein Mediendruck p auf die Dichtung. Die beiden Dichtlippen 22, 24 dichten die beiden Kontaktpartner gegenüber dem Mediendruck und der resultierenden Konvektion des Mediums ab. Da die Dichtlippen 22, 24 keilförmig konkav der Druckrichtung entgegenstehen, werden die Dichtlippen gegen die jeweiligen Bauteile gedrückt, wodurch die Anpressfläche und damit die Dichtwirkung erhöht wird.

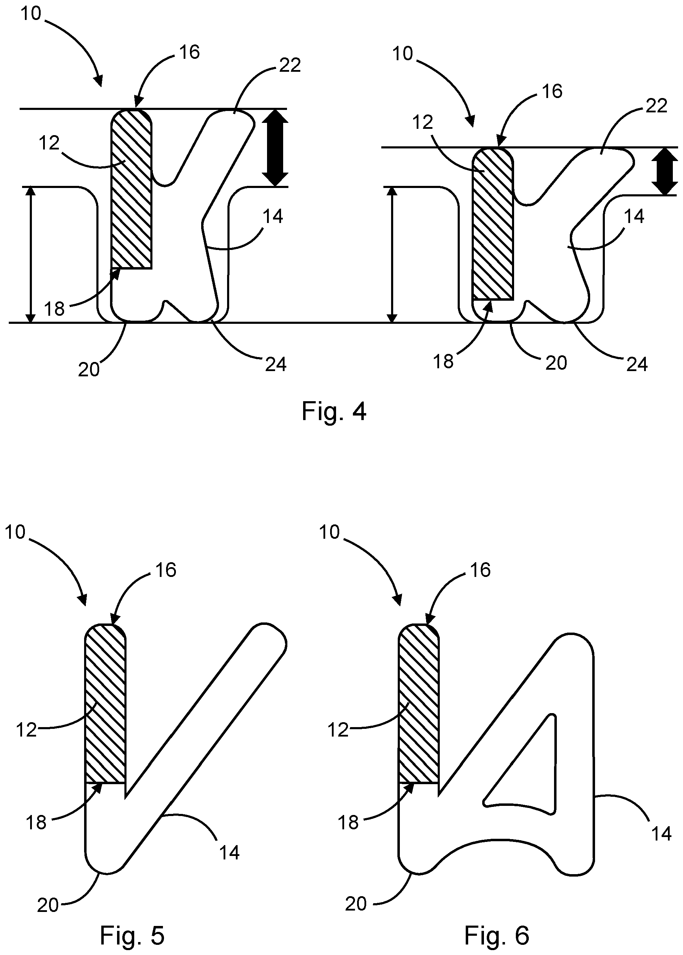

Fig. 4 zeigt zwei Darstellungen der in Fig. 2 beschriebene Dichtung 10, wobei der Dichtspalt in der linken Darstellung größer ist als in der rechten Darstellung.

Es ist die gleiche Dichtung in der gleichen Dichtnut dargestellt. Lediglich der Dichtspalt ist in der rechten Darstellung geringer. Dies kann zum Beispiel in Anwendungen vorkommen, sofern es sich um große Gehäuseabdichtungen mit einer ungleichmäßigen Verschraubung, die Fertigungstoleranzen sehr groß sind oder die Planparallelität nicht ausreichend ist. Es ist auch denkbar, dass es sich um unterschiedliche Anwendungen handelt.

In der linken Darstellung ist der kompressible Bereich 20 nur leicht zusammengedrückt, wobei die Dichtlippen 22, 24 in Kontakt mit den Bauteilen stehen und diese abdichten.

In der rechten Darstellung ist der kompressible Bereich 20 durch den kleineren Dichtspalt stärker zusammengedrückt, so dass die Höhenausprägung der Dichtung 10 reduziert wird. Die erste Dichtlippe 22 und die zweite Dichtlippe 24 werden ebenfalls zusammengedrückt, so dass die Dichtfunktion weiter gewährleistet werden kann.

Somit kann über den kompressiblen Bereich 20 ein Höhenunterschied im Dichtspalt mit der Dichtung 10 kompensiert werden.

Fig. 5 zeigt eine weitere Ausführungsform der Dichtung 10 mit integrierter Stützfunktion für eine statische axiale Dichtungsanwendung im Kraftnebenschluss, insbesondere für einen resultierenden Dichtspalt, insbesondere mit variabler Höhe. Die Dichtung weist eine erste Struktur 12 umfassend ein erstes Material, und eine zweite Struktur 14 umfassend ein zweites Material, auf. Die erste Struktur 12 und die zweite Struktur 14 sind zumindest teilweise miteinander verbunden, und die erste Struktur 12 weist eine höhere Härte als die zweite Struktur 14 auf. Die erste Struktur 12 ist länglich ausgestaltet und umfasst ein erstes Ende 16 und ein zweites Ende 18. Die erste Struktur ist ferner ausgestaltet, ihrer Länge nach in eine Dichtnut einführbar zu sein. Die zweite Struktur 14 umschließt das zweite Ende 18 zumindest teilweise und bildet somit einen an das zweite Ende 18 anschließenden flexiblen Bereich 20 aus, derart, dass die Dichtung an dem flexiblen Bereich 20 kompressibel ist und somit Höhenunterschiede ausgleichen kann.

Die Dichtung weist dabei nur eine erste Dichtlippe 22 auf. Der Übergang von erster Dichtlippe 22 zu flexiblem Bereich 20 kann dabei scharfkantig oder fließend sein. Die Wandstärke von Dichtlippe 22 kann sich dabei von der Wandstärke der ersten Struktur 12 unterscheiden oder mit dieser identisch sein.

Fig. 6 zeigt eine weitere Ausführungsform der Dichtung 10 mit integrierter Stützfunktion für eine statische axiale Dichtungsanwendung im Kraftnebenschluss, insbesondere für einen resultierenden Dichtspalt, insbesondere mit variabler Höhe. Die Dichtung weist eine erste Struktur 12 umfassend ein erstes Material, und eine zweite Struktur 14 umfassend ein zweites Material, auf. Die erste Struktur 12 und die zweite Struktur 14 sind zumindest teilweise miteinander verbunden, und die erste Struktur 12 weist eine höhere Härte als die zweite Struktur 14 auf. Die erste Struktur 12 ist länglich ausgestaltet und umfasst ein erstes Ende 16 und ein zweites Ende 18. Die erste Struktur ist ferner ausgestaltet, ihrer Länge nach in eine Dichtnut einführbar zu sein. Die zweite Struktur 14 umschließt das zweite Ende 18 zumindest teilweise und bildet somit einen an das zweite Ende 18 anschließenden flexiblen Bereich 20 aus, derart, dass die Dichtung an dem flexiblen Bereich 20 kompressibel ist und somit Höhenunterschiede ausgleichen kann.

In dieser Ausführungsform sind die erste Dichtlippe 22 und die zweite Dichtlippe 24 über eine dritte Dichtlippe derart verbunden, dass sich ein Hohlraum bildet.

All diese Ausführungsformen eint, dass über die, im Verhältnis zur zweiten Struktur 14, höhere Härte der ersten Struktur 12, eine Spaltextrusion verhindert wird, wobei durch den flexiblen Bereich 20 der zweiten Struktur 14 Höhenunterschiede entlang eines Dichtspalts kompensiert werden können.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 10: Dichtung
- 12: erste Struktur
- 14: zweite Struktur
- 16: erstes Ende
- 18: zweites Ende
- 20: flexibler Bereich
- 22: erste Dichtlippe
- 24: zweite Dichtlippe

## Patentansprüche

1. Dichtung (10) mit integrierter Stützfunktion für eine statische axiale Dichtungsanwendung im Kraftnebenschluss, insbesondere für einen resultierenden Dichtspalt, insbesondere mit variabler Höhe, aufweisend:
eine erste Struktur (12) umfassend ein erstes Material, und
eine zweite Struktur (14) umfassend ein zweites Material,
wobei die erste Struktur (12) und die zweite Struktur (14) zumindest teilweise miteinander verbunden sind, und
wobei die erste Struktur (12) eine höhere Härte, insbesondere Shore-A-Härte, als die zweite Struktur (14) aufweist,
wobei die erste Struktur (12) länglich ausgestaltet ist und ein erstes Ende (16) und ein zweites Ende (18) umfasst und ausgestaltet ist, ihrer Länge nach in eine Dichtnut einführbar zu sein, und
wobei die zweite Struktur (14) das zweite Ende (18) zumindest teilweise umschließt und somit einen an das zweite Ende (18) anschließenden flexiblen Bereich (20) ausbildet,
derart, dass die Dichtung an dem flexiblen Bereich (20) kompressibel ist und somit Höhenunterschiede ausgleichen kann.

2. Dichtung (10) nach Anspruch 1, wobei die zweite Struktur (14) eine erste Dichtlippe (22) umfasst.

3. Dichtung nach Anspruch 2, wobei die erste Dichtlippe (22) ein drittes Material umfasst, wobei das dritte Material von dem zweiten Material verschieden ist.

4. Dichtung (10) nach einem der vorhergehenden Ansprüche, wobei das erste Material und/oder das zweite Material ein Elastomer oder ein Thermoplast umfasst.

5. Dichtung (10) nach einem der vorhergehenden Ansprüche, wobei das erste Material und/oder das zweite Material ein Duroplast umfassen.

6. Dichtung (10) nach einem der vorhergehenden Ansprüche, wobei das zweite Material eine Shore-A-Härte im Bereich von 50 bis 70, und das erste Material eine Shore-A-Härte im Bereich von 80 bis 90 aufweist.

7. Dichtung (10) nach einem der vorhergehenden Ansprüche, wobei die erste Struktur (12) und die zweite Struktur (14) einen 2-Komponenten Gummi-Gummi Verbund umfasst.

8. Dichtung (10) nach einem der vorhergehenden Ansprüche, wobei das erste Material einen metallischen Werkstoff umfasst.

9. Dichtung (10) nach einem der vorhergehenden Ansprüche, wobei die Dichtung eingerichtet ist, die Dichtfunktion im Kraftnebenschluss auszuüben.

10. Dichtung (10) nach einem der vorhergehenden Ansprüche,
wobei der Querschnitt der Dichtung eine V-Form, eine K-Form oder eine H-Form umfasst.

11. Dichtung (10) nach einem der vorhergehenden Ansprüche, wobei die Dichtung in ihrer Längsausprägung eine geschlossene Geometrie oder eine offene Geometrie umfasst.

12. Dichtung (10) nach einem der vorhergehenden Ansprüche, wobei die zweite Struktur (14) eine zweite Dichtlippe (24), insbesondere mehrere Dichtlippen umfasst.

13. Dichtung (10) nach einem der vorhergehenden Ansprüche, wobei das erste Ende (16) und/oder das zweite Ende (18) abgerundet oder abgekantet ausgestaltet ist.

14. Vehikel, aufweisend eine Dichtung (10) nach einem der vorhergehenden Ansprüche, wobei das Vehikel (100) vorzugsweise ein Luftfahrzeug, ein Schiff, ein Raumfahrzeug oder ein Straßenfahrzeug ist.

15. Vorrichtung, aufweisend eine Dichtung (10) nach einem der Ansprüche 1 bis 13.
